# EUROPÄISCHE PATENTSCHRIFT

(11) **EP 0 835 844 B1**
(45) Veröffentlichungstag und Bekanntmachung des Hinweises auf die Patenterteilung: **12.06.2002**
(21) Anmeldenummer: 97115069.3
(22) Anmeldetag: 30.08.1997
(51) Int. Cl.: C02F 1/72, C02F 1/68, G01N 27/26

(54) **Verfahren zur Dosierung von wasserstoffperoxidhaltigen Lösungen**
Process for dosing hydrogen peroxide containing aqueous solutions
Procédé pour le dosage d'une solution aqueuse du péroxyde d'hydrogène

(30) Priorität: 14.10.1996 DE 19642413
(43) Veröffentlichungstag der Anmeldung: 15.04.1998
(73) Patentinhaber: Dinotec GmbH Wassertechnologie und Schwimmbadtechnik, 63477 Maintal (DE)
(72) Erfinder: Schminke, Dieter, 60598 Frankfurt am Main (DE); Scheffold, Christoph, 41844 Wegberg (DE)
(74) Vertreter: KEIL & SCHAAFHAUSEN

(56) Entgegenhaltungen:
- US-A- 3 815 620
- US-A- 3 902 970
- US-A- 4 416 786
- US-A- 5 364 510
- US-A- 5 395 493
- US-A- 5 470 484
- DATABASE WPI Section Ch, Week 8011 Derwent Publications Ltd., London, GB; Class E36, AN 80-19948C XP002079687 & SE 7 804 607 A (ING ORRJE & CO AB) , 19. November 1979

## Beschreibung

Die Erfindung betrifft ein Verfahren zur Dosierung von wasserstoffperoxidhaltigen wässrigen Lösungen, insbesondere zur Wasseraufbereitung (Entkeimung, Algenverhinderung u.a.) in Schwimmbädern, gemäß dem Oberbegriff des Anspruchs 1.

Seit mehreren Jahren wird verstärkt das bisher überwiegend gebräuchliche Chlor zur Entkeimung und Algenverhütung des Schwimmbadwassers durch wasserstoffperoxidhaltige Produkte (Aktivsauerstoff) ersetzt. Diese Produkte werden entweder manuell dem Schwimmbadwasser zugesetzt oder über Dosierpumpen, die ihrerseits wiederum von zeitgesteuerten Regelgeräten in Betrieb gesetzt werden. Hierbei wird zwar eine gewisse Automatik erreicht, es wird jedoch keine automatische Regelung des Wasserstoffperoxidgehaltes bezogen auf die im Wasser enthaltene Konzentration des Produktes durchgeführt. Der Nachteil dieser zeitgesteuerten Dosierung ist, dass die Nachdosierung nicht am Verbrauch orientiert ist und es damit teilweise zu erheblichen Überdosierungen oder Unterdosierungen kommen kann. Bei Überdosierungen besteht das Risiko, dass sich insbesondere bei Gegenstromschwimmanlagen Aerosole mit höheren Anteilen von Wasserstoffperoxid bilden können, die zu Atemwegsreizungen führen können. Zu niedrige Konzentrationen stellen die Entkeimung im Wasser nicht sicher und es bilden sich in verstärktem Maße Algen.

Alle bisherigen Versuche, elektrochemische Messmethoden zu schaffen, mit denen eine automatische Messung und Regelung von Wasserstoffperoxid ermöglicht wird, führten nicht zu den gewünschten Ergebnissen.

So scheiterte der Versuch, eine Messung und Regelung anhand der Redox-Spannung vorzunehmen, obwohl ein solches Messverfahren im Schwimmbadbereich für Oxidationsmittel wie Chlor, Chlordioxid und Ozon, bei denen ein steigender Gehalt im Wasser eine steigende Redox-Spannung verursacht, bereits verwendet wird. Es ist nämlich bekannt, dass eine Redox-Spannung in der Größenordnung oberhalb 700 mV für eine schnelle Keimabtötung und somit für eine ausreichende Entkeimung des Schwimmbadwassers sorgt. Diese Messmethodik ist jedoch für mit Wasserstoffperoxid behandeltes Wasser nicht anwendbar, da die Redox-Spannung sich durch Zugabe von Wasserstoffperoxid nicht verändert. Steigende Konzentrationen werden somit nicht über die Redox-Spannung erfasst und erzeugen kein für eine Regelung verwertbares Signal.

Auch eine amperometrische Messung, wie sie bei Chlor, Chlordioxid, Ozon etc. bekannt ist, scheidet bei Aktivsauerstoff aus. Bei einer amperometrischen Messung wird nämlich auch die elektrische Leitfähigkeit des Wassers, der Sauerstoffgehalt, der sich ändernde pH-Wert und einen Reihe anderer Parameter, u.a. auch der vom Wasserstoffperoxid abgespaltene Sauerstoff miterfasst, ohne dass jedoch Wasserstoffperoxid als Einzelparameter selektiv zu einem Messsignal führt.

Aus der US 5,470,484 ist ein Verfahren zur Zufuhrkontrolle von Chemikalien zur Wasserbehandlung bekannt, bei dem die Konzentration der Chemikalien vorzugsweise durch ein aus einer Arbeits-, Gegen- und Referenzelektrode bestehenden 3-Elektroden-System bestimmt wird, indem nach Anlegen einer externen, positiven Spannung zwischen der Arbeits- und Gegenelektrode die durch die Arbeitselektrode fließende Stromstärke gemessen wird und über das so erhaltene Signal nach entsprechender Signalweiterverarbeitung die Chemikalienzufuhr gesteuert wird. Vorzugsweise werden bei diesem Verfahren als Referenzelektroden Silber- oder Silberchloridelektroden, als Gegenelektrode Metalloder Graphitstangen und als Arbeitselektrode Platin, Gold oder spezielle Arten von Kohlenstoff eingesetzt. Die beschriebene voltametrische Strommessung wird bspw. zur Bestimmung von Blei oder Kupfer in Abwasserströmen mit einer vergleichsweise niedrigen positiven Spannung an der Arbeitselektrode von etwa +300 mV durchgeführt.

Aus dem US-Patent 5,364,510 ist die potentiostatische Messung von Wasserstoffperoxid in Badewasser bekannt. Hierzu werden in einem amperometrischen Messgerät eine Arbeitselektrode, eine Referenzelektrode und eine Gegenelektrode eingesetzt, wobei bei Verwendung einer Platinelektrode die Oxidation gegenüber einer Silber- oder Silberchloridreferenzelektrode bei etwa +700 mV erfolgt.

Aufgabe der vorliegenden Erfindung ist es daher, ein Verfahren zur Verfügung zu stellen, welches eine sichere Messung des H₂O₂-Anteils in wässrigen Lösungen, insbesondere in einem Konzentrationsbereich zwischen 1 und 500 ppm, und eine Weiterverwertung des Messsignals zur automatischen Dosierung von wasserstoffperoxidhaltigen wässrigen Lösungen ermöglicht.

Diese Aufgabe wird erfindungsgemäß durch die Merkmale des Anspruchs 1 gelöst.

Damit wird erfindungsgemäß mittels eines potentiostatischen Messverfahrens der Aktivsauerstoffgehalt konzentrationsproportional als elektrisches Signal erfasst und danach in einem Regelsystem als Regelgröße für die (Nach)-Dosierung verwertet. Dabei ermöglicht erst die spezielle Auswahl der Elektroden des 3-Elektroden-Systems eine reproduzierbare Messung auch bei steigenden Konzentrationen (über 30 mg/l). Für die Gegenelektrode hat sich als besonders unproblematisches Material Titan erwiesen.

Das erfindungsgemäße Verfahren hat sich insbesondere bei Messungen von wasserstoffperoxidhaltigen wässrigen Lösungen in einem Konzentrationsbereich zwischen 1 und 500 ppm als äußerst zuverlässig herausgestellt.

Gemäß einer weiteren Ausgestaltung der Erfindung ist vorgesehen, dass das Referenzsignal konstant gehalten wird und das Messsignal für die Dosierung der wasserstoffperoxidhaltigen wässrigen Lösung (Aktivsauerstoff) kontinuierlich mit dem Referenzsignal verglichen wird. Damit wird das elektrische Messsignal zur Regelgröße für die Nachdosierung.

Mit dem erfindungsgemäßen Verfahren wird auch dann ein definiertes konzentrationsproportionales elektrisches Messsignal erhalten, wenn der wässrigen Lösung von Wasserstoffperoxid zur Wirkungsverbesserung und/oder Wirkungsbeschleunigung organische und/oder anorganische Bioziden und/oder Silber und/oder organische Peroxide zugesetzt sind.

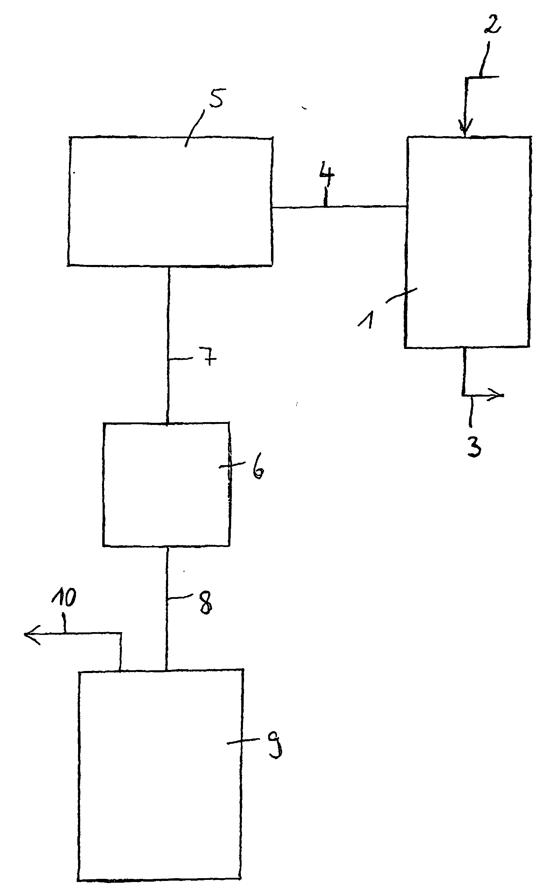

Weitere Merkmale, Vorteile und Anwendungsmöglichkeiten der Erfindung ergeben sich aus der nachfolgenden Beschreibung eines Ausführungsbeispieles und der Zeichnung.

Die einzige Figur zeigt in einer Blockbilddarstellung den schematischen Aufbau einer Vorrichtung zur Durchführung des erfindungsgemäßen Verfahrens zur Dosierung von wasserstoffperoxidhaltigen wässrigen Lösungen.

Die Vorrichtung besteht aus einer Mess- und Regeleinrichtung mit einer als Durchlaufarmatur ausgebildeten Messzelle 1, die einen Einlass für einen Messwasser-Vorlauf 2 und einen Auslass für einen Messwasser-Rücklauf 3 enthält. Die Messzelle 1 weist ein (nicht dargestelltes) 3-Elektroden-System auf. Zwischen einer Messelektrode und einer Gegenelektrode des Elektroden-Systems wird ein elektrische Messsignal und zwischen einer Bezugselektrode und der Gegenelektrode ein Referenzsignal erzeugt, welche beide über eine Leitung 4 einer Steueranlage 5 zugeführt werden. In der Steueranlage 5 werden das Messsignal und das Referenzsignal ausgewertet und zur Steuerung einer Dosiereinrichtung 6 aufbereitet. Dieses Steuersignal wird von der Steueranlage 5 über eine elektrische Leitung 7 der Dosiereinrichtung 6 zugeführt. In der Dosiereinrichtung 6 ist als Antriebseinrichtung zur Förderung des Dosiermediums, d.h. der wasserstoffperoxidhaltigen wässrigen Lösung, ein (nicht dargestellter) Synchron-Getriebemotor angeordnet.

Ergibt die Auswertung des Messsignals die Notwendigkeit einer Nachdosierung der wasserstoffperoxidhaltigen wässrigen Lösung, saugt der Synchron-Getriebemotor über eine Leitung 8 das Dosiermedium aus einem Vorratsbehälter 9 in das Leitungssystem des Schwimmbades oder dgl. Dieses ist in Form einer Zuleitung 10 zum Leitungssystem schematisch dargestellt.

Die in der Messzelle 1 vorgesehene Messelektrode ist eine Platinelektrode mit einer negativen Referenzspannung. Die Gegenelektrode ist eine Titanelektrode. Es kann jedoch auch eine Edelstahl- oder Nickelelektrode verwendet werden. Für die Bezugselektrode zur Bestimmung des Referenzsignals hat sich als Elektrodenmaterial Silber oder Silberchlorid als besonders vorteilhaft erwiesen.

Diese Elektrodenkombination ermöglicht eine Überwachung des Aktivsauerstoffanteils in einem Konzentrationsbereich zwischen 1 und 500 ppm. Eine permanente Überwachung der Wasserqualität ist besonders einfach, wenn mittels des Computerprogramms der Steueranlage das Referenzsignal ständig konstant gehalten wird und lediglich die Veränderungen des Messsignals zur Steuerung der Dosierung des Aktivsauerstoffanteils genutzt werden. Ist der Anteil Aktivsauerstoffs im Wasser in Übereinstimmung mit dem Sollwert, erfolgt keine Dosierung und der Synchron-Getriebemotor steht still. Unterschreitet der Aktivsauerstoffanteil in dem Wasser einen vorgegebenen Wert, schaltet die Steueranlage 5 den Synchron-Getriebemotor der Dosierstation 6 solange ein, bis die benötigte Dosiermenge aus dem Dosiergebinde 9 über die Zuleitung 10 dem Wasser zugegeben ist.

Zur Wirkungsverbesserung und/oder Wirkungsbeschleunigung können der wasserstoffperoxidhaltigen wässrigen Lösung Zusätze in Form organischer und/oder anorganischer Biozide, sowie Silber und/oder organische Peroxide beigegeben werden.

## Patentansprüche

1. Verfahren zur Dosierung von wasserstoffperoxidhaltigen wässrigen Lösungen, insbesondere zur Wasseraufbereitung in Schwimmbädern, bei dem
a) einer wässrigen Lösung über eine Dosiereinrichtung (6) eine wasserstoffperoxidhaltige Lösung zugeführt wird,
b) mittels eines aus einer Bezugs-, Mess- und Gegenelektrode bestehenden 3-Elektroden-Systems zwischen der Mess- und der Gegenelektrode ein Messsignal sowie zwischen der Bezugs- und der Gegenelektrode ein Referenzsignal erzeugt wird, wobei als Bezugselektrode eine Silber- oder Silberchloridelektrode eingesetzt wird,
c) das Mess- und das Referenzsignal zu einer Steueranlage (5) weitergeleitet wird, in der die beiden Signale aufbereitet und zu einem Steuersignal weiterverarbeitet werden, und
d) das Steuersignal an die Dosiereinrichtung (6) zur Steuerung der Dosierung der wasserstoffperoxidhaltigen Lösung weitergeleitet wird,
**dadurch gekennzeichnet, dass** als Messelektrode eine Platinelektrode mit negativer Referenzspannung und als Gegenelektrode eine Edelstahl, Nickel- oder Titanelektrode eingesetzt wird.

2. Verfahren nach Anspruch 1, **dadurch gekennzeichnet, dass** die Messung in einem Konzentrationsbereich zwischen 1 und 500 ppm Wasserstoffperoxid durchgeführt wird.

3. Verfahren nach Anspruch 1, **dadurch gekennzeichnet, dass** das Referenzsignal mittels der mikroprozessorgeregelten Steueranlage (5) auf einen konstanten Wert eingestellt und kontinuierlich mit dem Messsignal für die Dosierung der wasserstoffperoxidhaltigen wässrigen Lösung verglichen wird.

## Claims

1. Method for metering hydrogen peroxide-containing aqueous solutions, in particular for water treatment in swimming pools, in which
a) a hydrogen peroxide-containing solution is fed to an aqueous solution via a metering device (6),
b) using a three-electrode system consisting of a reference electrode, a measuring electrode and a counter electrode, a measurement signal is produced between the measuring electrode and the counter electrode and a reference signal between the reference electrode and the counter electrode, a silver or silver chloride electrode being used as reference electrode,
c) the measurement signal and the reference signal are conveyed to a control unit (5) in which the two signals are preprocessed and are further processed to form a control signal, and
d) the control signal is conveyed to the metering device (6) to control the metering of the hydrogen peroxide-containing solution,
**characterised in that** a platinum electrode with negative reference voltage is used as measuring electrode and a high-quality steel, nickel or titanium electrode is used as counter electrode.

2. Method according to claim 1, **characterised in that** measurement is carried out in a concentration range of between 1 and 500 ppm hydrogen peroxide.

3. Method according to claim 1, **characterised in that** the reference signal is adjusted to a constant value by means of the microprocessor-controlled control unit (5) and is continuously compared with the measurement signal for metering of the hydrogen peroxide-containing aqueous solution.

## Revendications

1. Procédé pour le dosage de solutions aqueuses de peroxyde d'hydrogène, en particulier pour le traitement des eaux de piscines, dans lequel
a) une solution aqueuse est ajoutée à l'aide d'un dispositif de dosage (6) à une solution de peroxyde d'hydrogène,
b) un signal de mesure est produit entre l'électrode de mesure et la contre-électrode ainsi qu'un signal de référence entre l'électrode de référence et la contre-électrode au moyen d'un système à trois électrodes composé d'une électrode de référence, d'une électrode de mesure et d'une contre-électrode, une électrode en argent ou en chlorure d'argent étant utilisée comme l'électrode de référence,
c) le signal de mesure et le signal de référence sont transmis à une installation de contrôle (5) dans laquelle les deux signaux sont traités et transformés en un signal de contrôle, et
d) le signal de contrôle est transmis au dispositif de dosage (6) pour réguler le dosage de la solution de peroxyde d'hydrogène,
**caractérisé en ce qu'**une électrode de platine à tension de référence négative est utilisée comme l'électrode de mesure et une électrode en acier spécial, en nickel ou en titane est utilisée comme contre-électrode.

2. Procédé selon la revendication 1, **caractérisé en ce que** la mesure est exécutée dans un domaine de concentration compris entre 1 et 500 ppm de peroxyde d'hydrogène.

3. Procédé selon la revendication 1, **caractérisé en ce que** le signal de référence est réglé sur une valeur constante au moyen de l'installation de contrôle commandée par microprocesseur et est comparé continuellement avec le signal de mesure pour le dosage de la solution aqueuse de peroxyde d'hydrogène.
